# NOUVEAU FASCICULE DE BREVET EUROPEEN

(11) **EP 1 032 542 B2**
(45) Date de publication et mention de la décision concernant l'opposition: **15.10.2014**
(45) Mention de la délivrance du brevet: 01.09.2004
(21) Numéro de dépôt: 99942986.3
(22) Date de dépôt: 16.09.1999
(51) Int. Cl.: C03C 13/06

(54) **PROCEDE DE FABRICATION DE LAINE MINERALE**
VERFAHREN ZUR HERSTELLUNG VON MINERALWOLLE
PROCESS FOR MINERAL WOOL PRODUCTION

(30) Priorité: 17.09.1998 FR 9811607
(43) Date de publication de la demande: 06.09.2000
(73) Titulaire: SAINT-GOBAIN ISOVER, 92400 Courbevoie (FR)
(72) Inventeur: BERNARD, Jean-Luc, F-60600 Clermont (FR); LAFON, Fabrice, F-75018 Paris (FR); VIGNESOULT, Serge, F-75018 Paris (FR)
(74) Mandataire: Teyssedre, Laurent
(86) Numéro de dépôt international: PCT/FR1999/002205
(87) Numéro de publication internationale: WO 2000/017117

(56) Documents cités:
- EP-A1- 0 070 772
- EP-A1- 0 994 647
- EP-B1- 0 998 432
- WO-A-98/23547
- WO-A-99/56525
- WO-A1-93//02977
- WO-A1-97//29057
- WO-A1-97//31870
- WO-A1-99//57073
- WO-A2-96//14274
- DE-A- 19 604 238
- DE-U- 29 709 025
- US-A1- 0 525 816
- CHEMICAL ABSTRACTS, vol. 121, no. 24, 12 décembre 1994 (1994-12-12) Columbus, Ohio, US; abstract no. 285294, KAPUTA, ANDRZEJ ET AL: "Compositions for the manufacture of inorganic fibers" XP002124308 -& PL 160 196 B (CENTRALNY OSRODEK BADAWCZO-ROZWOJOWY PRZEMYSLU IZOLACJI BUDOWLANEJ, PO) 26 février 1993 (1993-02-26)

## Description

La présente invention concerne le domaine des laines minérales artificielles. Elle vise plus particulièrement les laines minérales destinées à fabriquer des matériaux d'isolation thermique et/ou acoustique ou des substrats de culture hors sol.

Elle s'intéresse plus particulièrement aux laines minérales du type laine de roche, c'est-à-dire dont les compositions chimiques entraînent une température de liquidus élevée et une grande fluidité à leur température de fibrage, associées une température de transition vitreuse élevée.

Conventionnellement, ce type de laine minérale est fibré par des procédés de centrifugation dits " externes ", par exemple du type de ceux utilisant une cascade de roues de centrifugation alimentées en matière fondue par un dispositif de distribution statique, comme décrit notamment dans les brevets EP-0 485 310 ou EP-0 439 385.

Le procédé de fibrage par centrifugation dit "interne", c'est-à-dire ayant recours à des centrifugeurs tournant à grande vitesse et percés d'orifices, est par contre conventionnellement réservé au fibrage de laine minérale de type laine de verre, schématiquement de composition plus riche en oxydes alcalins et à faible taux d'alumine, de température de liquidus moins élevée et de viscosité à température de fibrage plus grande que la laine de roche. Ce procédé est notamment décrit dans les brevets EP-0 189 354 ou EP-0 519 797.

Il a cependant été récemment mis au point des solutions techniques permettant d'adapter le procédé de centrifugation interne au fibrage de laine de roche, notamment en modifiant la composition du matériau constitutif des centrifugeurs et leurs paramètres de fonctionnement. On pourra pour plus de détails à ce sujet se reporter notamment au brevet WO 93/02977. Cette adaptation s'est révélée particulièrement intéressante au sens qu'elle permet de combiner des propriétés qui n'étaient jusque-là inhérentes qu'à l'un ou l'autre des deux types de laine, roche ou verre. Ainsi, la laine de roche obtenue par centrifugation interne est d'une qualité comparable à de la laine de verre, avec un taux d'infibrés moindre que de la laine de roche obtenue conventionnellement. Elle conserve cependant les deux atouts liés à sa nature chimique, à savoir un faible coût de matières chimiques et une tenue en température élevée.

Deux voies sont donc maintenant possibles pour fibrer de la laine de roche, le choix de l'une ou l'autre dépendant d'un certain nombre de critères, dont le niveau de qualité requis en vue de l'application visée et celui de faisabilité industrielle et économique.

A ces critères, s'est ajouté depuis quelques années celui d'un caractère biodégradable de la laine minérale, à savoir la cepacité de celle-ci à se dissoudre rapidement en milieu physiologique, en vue de prévenir tout risque pathogène potentiel lié à l'accumulation éventuelle des fibres les plus fines dans l'organisme par inhalation.

Une solution au problème du choix de composition de laine minérale de type roche et à caractère biosoluble consiste dans l'emploi de taux d'alumine élevé et de taux d'alcalins modérés.

Cette solution conduit notamment à des coûts de matières premières élevées, du fait de l'emploi préféré de bauxite.

La présente invention a pour but d'améliorer la composition chimique des laines minérales de type roche, amélioration visant notamment à augmenter leur caractère biodégradable avec une capacité à être fibré par centrifugation interne, tout en conservant la possibilité d'obtenir ces compositions avec des matières premières bon marché.

L'invention a pour objet un procédé d'obtention d'une laine minérale susceptible de se dissoudre dans un milieu physiologique, qui comprend les constituants ci-après selon les pourcentages pondéraux suivants :

| | | | |
|---|---|---|---|
| SiO₂ | 39-55 %, | de préférence | 40-52% |
| Al₂O₃ | 16-27% | -- | 16-25% |
| CaO | | | 10-25% |
| MgO | 0-5% | | |
| Na₂O | 0-15%, | -- | 6-12% |
| K₂O | 0-15%, | -- | 3-12% |
| R₂O (Na₂O + K₂O) | 10-17% | -- | 12-17% |
| P₂O₃ | 0-3%, | -- | 0-2% |
| Fe₂O₃ | 0-15% | | |
| B₂O₃ | 0-8%, | -- | 0-4% |
| TiO₂ | 0-3%. | | |

Selon un mode de réalisation avantageux de l'invention, la laine minérale comprend les constituants ci-après selon les pourcentages pondéraux suivants :

| | | | |
|---|---|---|---|
| SiO₂ | 39-55 %, | de préférence | 40-52 % |
| Al₂O₃ | 16-25 %, | -- | 17-22 % |
| CaO | | | 10-25 % |
| MgO | 0-5 % | | |
| Na₂O | 0-15 %, | -- | 6-12 % |
| K₂O | 0-15 %, | -- | 6-12 % |
| R₂O(Na₂O + K₂O) | 13,0-17 % | | |
| P₂O₅ | 0-3 %, | -- | 0-2 % |
| Fe₂O₃ | 0-15 %, | | |
| B₂O₃ | 0-8 %, | -- | 0-4 % |
| TiO₂ | 0-3 %, | | |

Dans la suite du texte, tout pourcentage d'un constituant de la composition doit se comprendre comme un pourcentage pondéral et les compositions selon l'invention peuvent comporter jusqu'à 2 ou 3 % de composés à considérer comme des impuretés non analysées, comme cela est connu dans ce genre de composition.

La sélection d'une telle composition a permis de cumuler toute une série d'avantages, notamment en jouant sur les multiples rôles, complexes, que jouent un certain nombre de ses constituants spécifiques.

On a pu constater en effet que l'association d'un taux d'alumine élevé, compris entre 16 et 27 %, de préférence supérieur à 17 % et/ou de préférence inférieur à 25 %, notamment à 22 %, pour une somme d'éléments formateurs, silice et alumine, comprise entre 57 et 75 %, de préférence supérieur à 60 % et/ou de préférence inférieur à 72 %, notamment à 70 %, avec une quantité d'alcalins (R₂O : soude et potasse) élevée comprise entre 10 et 17 %, avec MgO compris entre 0 et 5 %, notamment entre 0 et 2 %, permet d'obtenir des compositions de verre possédant la propriété remarquable d'être fibrables dans un vaste domaine de température et conférant un caractère biosoluble à pH acide aux fibres obtenues. Selon des modes de réalisation de l'invention, le taux d'alcalin est de préférence supérieur à 12 %, notamment à 13,0 % et même 13,3 % et/ou de préférence inférieur à 15 %, notamment inférieur à 14,5 %.

Ce domaine de compositions s'avère particulièrement intéressant car on a pu observer, que contrairement aux opinions reçues, la viscosité du verre fondu ne baisse pas significativement avec l'augmentation du taux d'alcalins. Cet effet remarquable permet d'augmenter l'écart entre la température correspondant à la viscosité du fibrage et la température de liquidus de la phase qui cristallise et ainsi d'améliorer considérablement les conditions de fibrage et rend notamment possible le fibrage en centrifugation interne d'une nouvelle famille de verres biosolubles.

Selon un mode de réalisation de l'invention, les compositions possèdent des taux d'oxyde de fer compris entre 0 et 5 %, notamment supérieur à 0,5 % et/ou inférieur à 3 %. notamment inférieur à 2,5 %. Un autre mode de réalisation est obtenu avec des compositions qui possèdent des taux d'oxyde de fer compris entre 5 et 12 %, notamment entre 5 et 8 %, ce qui peut permettre d'obtenir une tenue au feu des matelas de laines minérales.

Avantageusement, les compositions suivant l'invention respectent le ratio :
(Na₂O + K₂O)/Al₂O₃ ≥ 0,5 , de préférence (Na₂O + K₂O)/Al₂O₃ ≥ 0,6 , notamment (Na₂O + K₂O)/Al₂O₃ ≥ 0,7 qui apparaît favoriser l'obtention d'une température à la viscosité de fibrage supérieure à la température de liquidus.

Selon l'invention, les compositions ont un taux de chaux compris entre 10 et 25 %, notamment supérieur à 12 %, de préférence supérieur à 15 % et/ou de préférence inférieur à 23 %, notamment inférieur à 20 %, et même inférieur à 17 % associé à un taux de magnésie compris entre 0 et 5 %, avec de préférence moins de 2 % de magnésie, notamment moins de 1 % de magnésie et/ou un taux de magnésie supérieur à 0,3 %, notamment supérieur à 0,5 %.

Ajouter du P₂O₅, qui est optionnel, à des teneurs comprises entre 0 et 3 %, notamment supérieur à 0,5 % et/ ou inférieur à 2 %, peut permettre d'augmenter la biosolubilité à pH neutre. Optionnellement, la composition peut aussi contenir de l'oxyde de bore qui peut permettre d'améliorer les propriétés thermiques de la laine minérale, notamment en tendant à abaisser son coefficient de conductivité thermique dans la composante radiative et également augmenter la biosolubilité à pH neutre. On peut également inclure du TiO₂ dans la composition, de manière optionnelle, par exemple jusqu'à 3 %. D'autres oxydes tels que BaO, SrO, MnO, Cr₂O₃, ZrO₂, peuvent être présents dans la composition. chacun jusqu'à des teneurs de 2% environ.

La différence entre la température correspondant à une viscosité de 10^{2,5} poises (decipascal.seconde), notée T_{log 2,5} et le liquidus de la phase qui cristallise, notée T_{Liq} est de préférence d'au moins 10°C. Cette différence, T_{log 2,5} - T_{Liq} définit le " palier de travail " des compositions de l'invention, c'est-à-dire, la gamme de températures dans laquelle on peut fibrer, par centrifugation interne tout particulièrement. Cette différence s'établit de préférence à au moins 20 ou 30°C, et même à plus de 50°C, notamment plus de 100°C.

Les compositions produits suivant l'invention ont des températures de transition vitreuse élevées, notamment supérieures à 600°C. Leur température d'annealing (notée T_{Annealing}, connue également sous le nom de "température de recuisson") est notamment supérieure à 600°C.

Les laines minérales, comme mentionnées plus haut, présentent un niveau de biosolubilité satisfaisant notamment à pH acide. Elles présentent ainsi généralement une vitesse de dissolution, notamment mesurée sur la silice, d'au moins 30, de préférence d'au moins 40 ou 50 ng/cm² par heure mesurée à pH 4,5.

Un autre avantage très important de l'invention a trait à la possibilité d'utiliser des matières premières bon marché pour obtenir la composition de ces verres. Ces compositions peuvent notamment résulter de la fusion de roches, par exemple du type des phonolites, avec un porteur d'alcalinoterreux, par exemple calcaire ou dolomie, complétés si nécessaire par du minerai de fer. On obtient par ce biais un porteur d'alumine à coût modéré.

Ce type de composition, à taux d'alumine et à taux d'alcalins élevés peut être avantageusement fondue dans des fours verriers à flamme ou à énergie électrique.

D'autres détails et caractéristiques avantageuses ressortent de la description ci-après de modes de réalisation préférés non limitatifs.

Le tableau 1 ci-après regroupe les compositions chimiques, en pourcentages pondéraux, de cinq exemples.

Quand la somme de toutes les teneurs de tous les composés est légèrement inférieure ou légèrement supérieure à 100 %, il est à comprendre que la différence avec 100 % correspond aux impuretés/composants minoritaires non analysés et/ou n'est due qu'à l'approximation acceptée dans ce domaine dans les méthodes d'analyse utilisées.

**Tableau 1**

| | **EX. 1 *** | **EX. 2** | **EX. 3** | **EX. 4** | **EX. 5** |
|---|---|---|---|---|---|
| SiO₂ | 47,7 | 42,6 | 44,4 | 45,2 | 45,4 |
| Al₂O₃ | 18,6 | 18,1 | 17,3 | 17,2 | 18,1 |
| CaO | 6,2 | 22,7 | 21,7 | 15,3 | 13,5 |
| MgO | 7,1 | 0,2 | 0,4 | 0,5 | 0,5 |
| Na₂O | 8,0 | 6,3 | 6,0 | 6,2 | 6,5 |
| K₂O | 5,2 | 7,4 | 7,1 | 7,8 | 8,1 |
| Fe₂O₃ | 7,2 | 2,5 | 3 | 6,6 | 7,3 |
| **TOTAL** | **100** | **99,8** | **99,9** | **98,8** | **99,4** |
| SiO₂ + Al₂O₃ | 66,3 | 60,7 | 61,7 | 62,4 | 63,5 |
| Na₂O + K₂O | 13,2 | 13,7 | 13,1 | 14 | 14,6 |
| (Na₂O + K₂O)/Al₂O₃ | 0,71 | 0,76 | 0,76 | 0,81 | 0,81 |
| T_{Log} 2,5 | 1293°C | 1239°C | 1230°C | 1248°C | 1280°C |
| T_{Liq} | 1260°C | 1200°C | 1190°C | 1160°C | 1160°C |
| T_{Log2,5}- T_{Liq} | + 33°C | + 39°C | + 40°C | +88°C | + 120°C |
| T_{Annealing} | 622°C | 658°C | | 634°C | 631°C |
| vitesse dissolution à pH = 4,5 | ≥30 ng/cm² par h | ≥ 30 ng/cm² par h | ≥ 30 ng/cm² par h | 107 ng/cm² par h | 107 ng/cm² par h |

| | | | | | |
|---|---|---|---|---|---|
| * : l'exemple 1 est hors invention | | | | | |

Les compositions selon ces exemples ont été fibrées par centrifugation interne, notamment selon l'enseignement du brevet WO 93/02977 précité.

Leurs paliers de travail, définis par la différence T_{Log 2,5} - T_{Liq} sont largement positifs. Toutes ont un rapport (Na₂O + K₂O) /Al₂O₃ supérieur à 0,7 pour un taux d'alumine élevé d'environ 17 à 20 %, avec une somme (SiO₂ + Al₂O₃) assez élevée et un taux d'alcalins d'au moins 13,0 %.

Des exemples de compositions additionnels, produits selon l'invention, (référencés Ex. 6 à Ex. 40) se sont avérés intéressants et sont reportés dans le Tableau 2.

Toutes ont un rapport (Na₂O + K₂O)/Al₂O₃ supérieur à 0,5, notamment supérieur à 0,6, voire 0,7.

Leur taux d'alumine est élevé, compris entre 17% et plus de 25%, avec une somme (SiO₂ + Al₂O₃) notamment élevée, en particulier supérieure à 60%.

Le taux d'alcalins de ces exemples additionnels est notamment compris entre moins de 11,5% et plus de 14%.

On note que leurs paliers de travail sont largement positifs, notamment supérieurs à 50°C, voire même 100°C, et même supérieurs à 150°C.

Les températures de liquidus sont peu élevées, notamment inférieures ou égales à 1200°C et même 1150°C.

Les températures correspondant à des viscosités de 10^{2,5} poises (T_{Log 2.5}) sont compatibles avec l'utilisation d'assiettes de fibrage haute température notamment dans les conditions d'usage décrites dans la demande WO 93/02977.

Les compositions préférées sont notamment celles où T_{Log 2,5} est inférieur à 1350°C, de préférence inférieur à 1300°C.

On a pu observer que pour les compositions comprenant entre 0 et 5 % de magnésie MgO, notamment avec au moins 0,5 % de MgO et/ou moins de 2 %, voire moins de 1 % de MgO, et entre 10 et 13 % d'alcalins, on obtient des résultats de propriétés physiques, notamment paliers de travail, et de vitesse de dissolution très satisfaisants (cas des exemples : Ex. 18, Ex. 31, Ex. 32, Ex. 33, et Ex. 35 à Ex. 40).

On note que les températures d'annealing sont, notamment, supérieures à 600°C, et même supérieures à 620°C, voire même supérieures à 630°C.

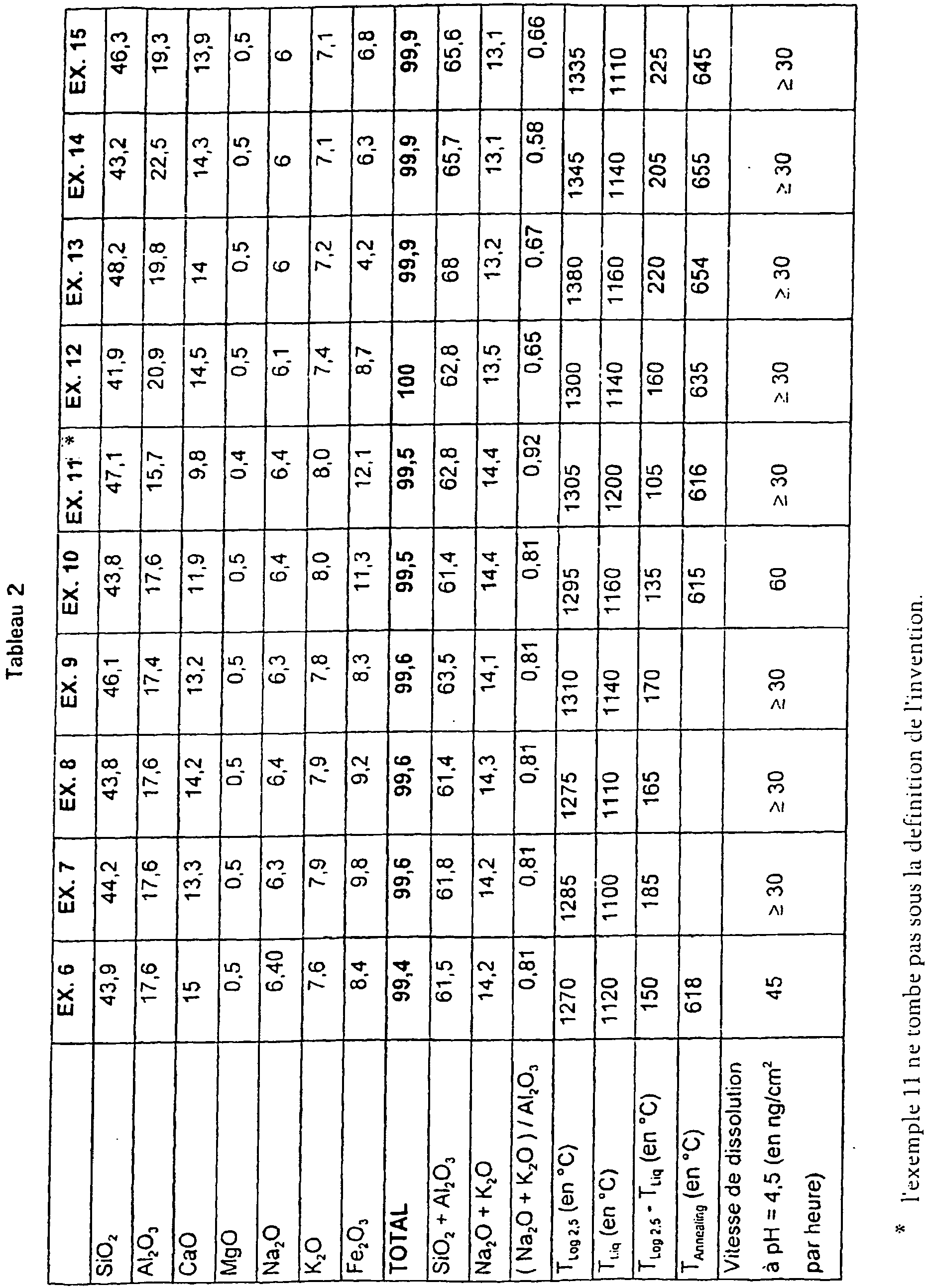

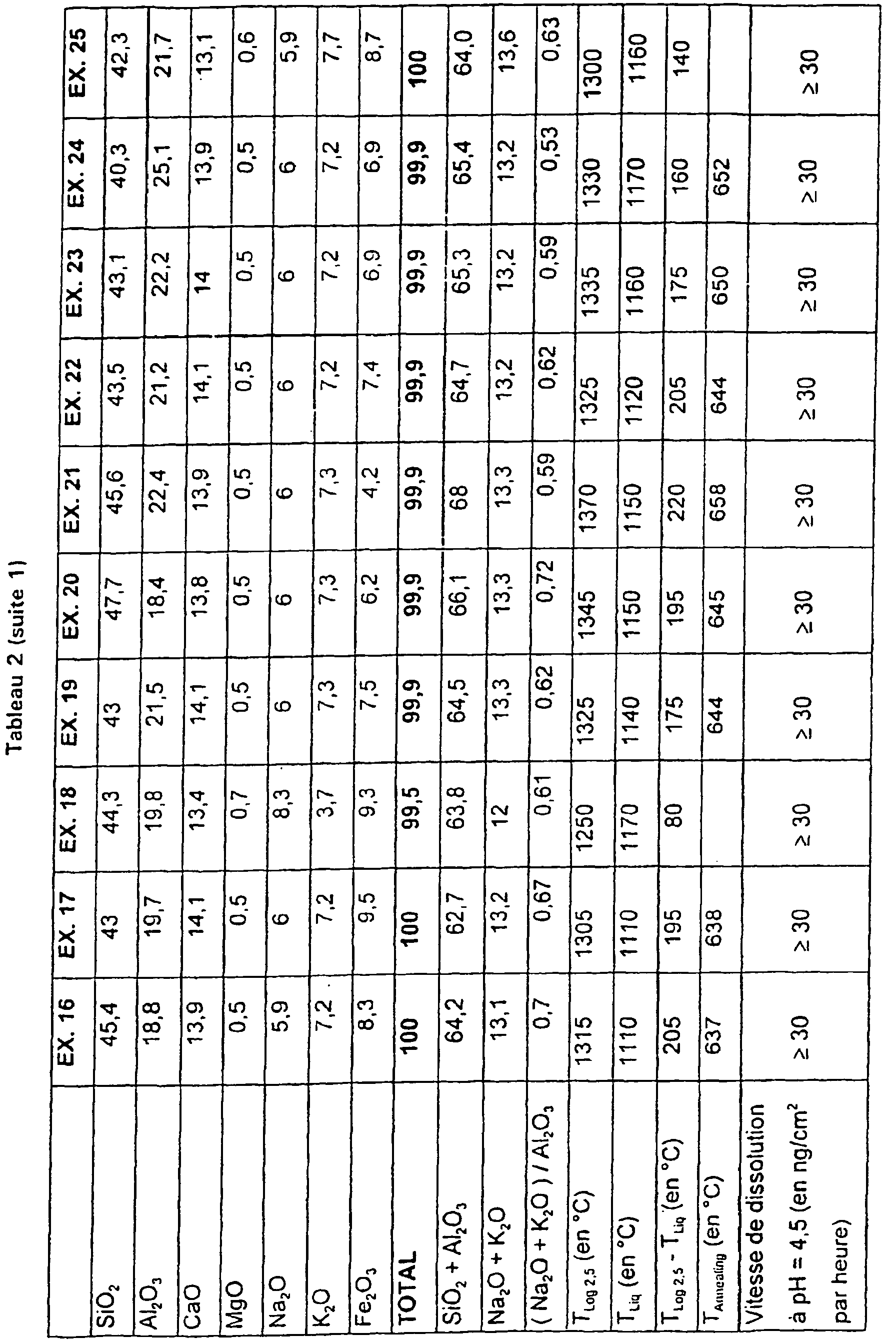

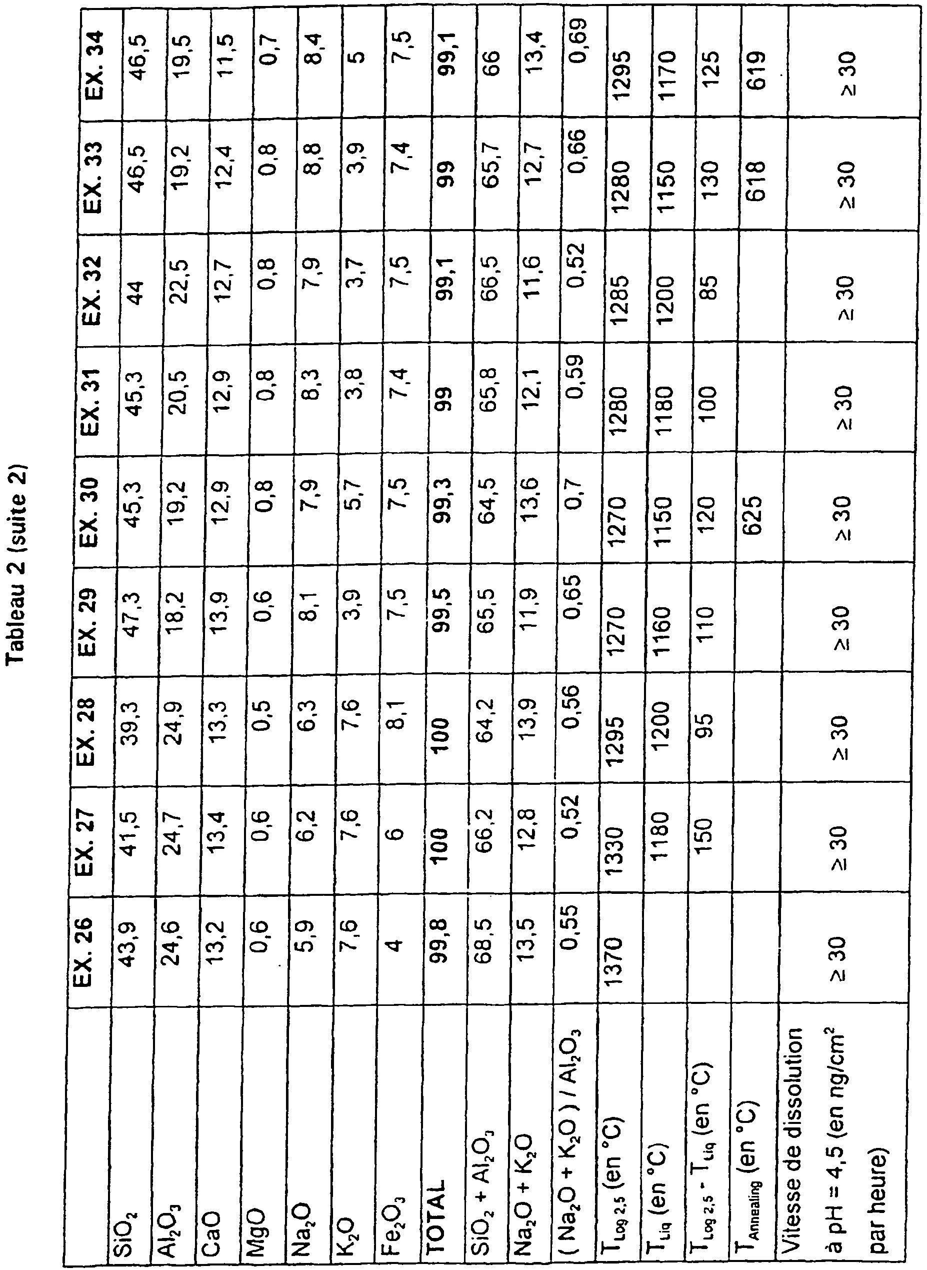

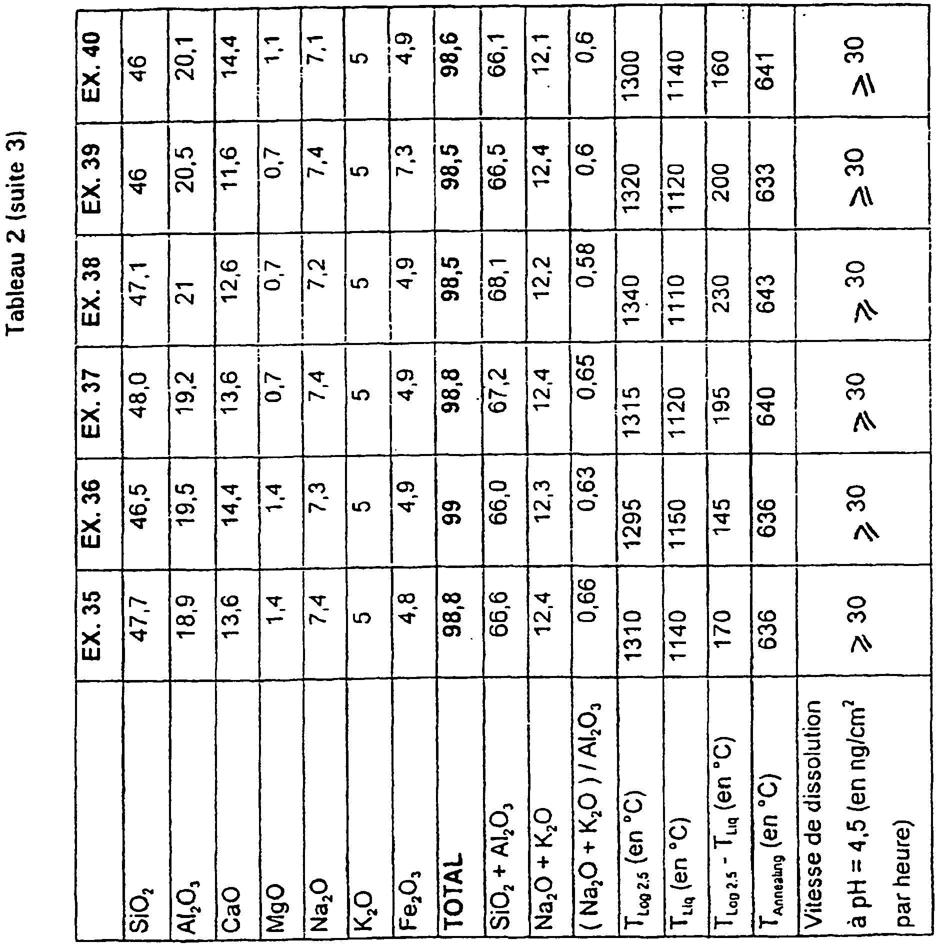

## Revendications

1. Procédé d'obtention d'une laine minérale susceptible de se dissoudre dans un milieu physlologlque, par fibrage d'un verre par centrifugation interne, ladite laine minérale comprenant les constituants ci-après selon les pourcentages pondéraux suivants :
| | | | |
|---|---|---|---|
| SiO₂ | 39-55 %, | de préférence | 40-52 % |
| Al₂O₃ | 18-27 %, | -- | 16-25 % |
| CaO | 10-25 %, | | |
| MgO | 0-5 %, | | |
| Na₂O | 0-15 %, | -- | 6-12 % |
| K₂O | 0-15 %, | -- | 3-12 % |
| R₂O (Na₂O + K₂O) | 10-17 %, | -- | 12-17 % |
| P₂O₅ | 0-3 %, | -- | 0-2 % |
| Fe₂O₃ | 0-15 %, | | |
| B₂O₃ | 0-8 %, | -- | 0-4 % |
| TiO₂ | 0-3 %. | | |

2. Procédé selon la revendication 1, **caractérisé en ce que** la laine minérale comprend les constituants ci-après selon les pourcentages pondéraux suivants :
| | | | |
|---|---|---|---|
| SiO₂ | 39-55 %, | de préférence | 40-52 % |
| Al₂O₃ | 16-25 %, | -- | 17-22 % |
| CaO | 10-25 %, | | |
| MgO | 0-5 %, | | |
| Na₂O | 0-15 %, | -- | 6-12 % |
| K₂O | 0-15 %, | -- | 6-12 % |
| R₂O (Na₂O + K₂O) | 13,0-17 %, | | |
| P₂O₅ | 0-3 %, | -- | 0-2 % |
| Fe₂O₃ | 0-15 %, | | |
| B₂O₃ | 0-8 %, | -- | 0-4 % |
| TiO₂ | 0-3%, | | |

3. Procédé selon les revendications 1 ou 2, **caractérisé en ce que** le taux d'alcalins (Na₂O + K₂O) est compris entre :
13,0 ≤ R₂O ≤ 15, notamment 13,3 ≤ R₂O ≤ 14,5

4. Procédé selon l'une des revendications précédentes, **caractérisé en ce que** la laine minérale comprend des teneurs en Fe₂O₃ (fer total) telles que :
0 ≤ Fe₂O₃ ≤ 5, de préférence 0 ≤ Fe₂O₃ ≤ 3, notamment 0,5 ≤ Fe₂O₃≤ 2,5

5. Procédé selon l'une des revendications 1 à 3, **caractérisé en ce que** la laine minérale comprend des teneurs en Fe₂O₃ (fer total) telles que :
5 ≤ Fe₂O₃ ≤ 15 , notamment 5 ≤ Fe₂O₃ ≤ 8

6. Procédé selon l'une des revendications précédentes, **caractérisé en ce que** la laine minérale respecte la relation:
(Na₂O + K₂O)/Al₂O₃ ≥ 0,5

7. Procédé selon l'une des revendications précédentes, **caractérisé en ce que** la laine minérale respecte la relation :
(Na₂O + K₂O)/Al₂O₃ ≥ 0,6, notamment (Na₂O + K₂O)/Al₂O₃ ≥ 0,7

8. Procédé selon l'une des revendications précédentes, **caractérisé en ce que** la laine minérale comprend des teneurs en chaux et magnésie telles que : 15 ≤ CaO ≤ 25 avec de préférence 0 ≤ MgO ≤ 2, notamment 0 ≤ MgO ≤ 1

## Patentansprüche

1. Verfahren zur Herstellung einer im physiologischen Milieu löslichen Mineralwolle durch Zerfaserung eines Glases mittels interner Zentrifugation, wobei die Mineralwolle die folgenden Inhaltsstoffe in den genannten Gewichtsprozentanteilen enthält:
| | | | |
|---|---|---|---|
| SiO₂ | 39-55 %, | bevorzugt | 40-52 % |
| Al₂O₃ | 16-27 %, | -- | 16-25 % |
| CaO | 10-25 %, | | |
| MgO | 0-5 %, | | |
| Na₂O | 0-15 %, | -- | 6-12 % |
| K₂O | 0-15 %, | -- | 3-12 % |
| R₂O (Na₂O+ K₂O) | 10-17 %, | -- | 12-17 % |
| P₂O₅ | 0-3 %, | -- | 0-2 % |
| Fe₂O₃ | 0-15 %, | | |
| B₂O₃ | 0-8 %, | -- | 0-4 % |
| TiO₂ | 0-3 %. | | |

2. Verfahren nach Anspruch 1, **dadurch gekennzeichnet, dass** die Mineralwolle die folgenden Inhaltsstoffe in den genannten Gewichtsprozentanteilen enthält:
| | | | |
|---|---|---|---|
| SiO₂ | 39-55 %, | bevorzugt | 40-52 % |
| Al₂O₃ | 16-25 %, | -- | 17-22 % |
| CaO | 10-25 %, | | |
| MgO | 0-5 %, | | |
| Na₂O | 0-15 %, | -- | 6-12 % |
| K₂O | 0-15 %, | -- | 6-12 % |
| R₂O (Na₂O+ K₂O) | 13,0-17 %, | | |
| P₂O₅ | 0-3 %, | -- | 0-2 % |
| Fe₂O₃ | 0-15 %, | | |
| B₂O₃ | 0-8 %, | -- | 0-4 % |
| TiO₂ | 0-3 %. | | |

3. Verfahren nach Anspruch 1 oder 2, **dadurch gekennzeichnet, dass** der Alkalianteil (Na₂O
+ K₂O) liegt zwischen:
13,0 ≤ R₂O ≤ 15, insbesondere 13,3 ≤ R₂O ≤ 14,5.

4. Verfahren nach einem der vorhergehenden Ansprüche, **dadurch gekennzeichnet, dass** die Mineralwolle Fe₂O₃ (Gesamteisen) in den folgenden Anteilen enthält:
0 ≤ Fe₂O₃ ≤ 5, bevorzugt 0 ≤ Fe₂O₃ ≤ 3, insbesondere 0,5 ≤ Fe₂O₃ ≤ 2,5.

5. Verfahren nach einem der vorhergehenden Ansprüche, **dadurch gekennzeichnet, dass** die Mineralwolle Fe₂O₃ (Gesamteisen) in den folgenden Anteilen enthält:
5 ≤ Fe₂O₃ ≤ 15, insbesondere 5 ≤Fe₂O₃ ≤ 8.

6. Verfahren nach einem der vorhergehenden Ansprüche, **dadurch gekennzeichnet, dass** die Mineralwolle die Beziehung erfüllt:
(Na₂O + K₂O)/Al₂O₃ ≥ 0,5.

7. Verfahren nach einem der vorhergehenden Ansprüche, **dadurch gekennzeichnet, dass** die Mineralwolle die Beziehung erfüllt:
(Na₂O + K₂O)/Al₂O₃ ≥ 0,6, insbesondere (Na₂O + K₂O)/Al₂O₃ ≥ 0,7.

8. Verfahren nach einem der vorhergehenden Ansprüche, **dadurch gekennzeichnet, dass** die Mineralwolle Kalk und Magnesiumoxid in den folgenden Anteilen enthält:
15 ≤ CaO ≤ 25, und bevorzugt 0 ≤ MgO ≤ 2, insbesondere 0 ≤ MgO ≤ 1.

## Claims

1. A method for making a mineral wool capable of dissolving in a physiological medium, by fiberirizing a glass by internal centrifuging, said mineral wool comprising the constituents below according to the following percentages by weight:
| | | | |
|---|---|---|---|
| SiO₂ | 39-55%, | preferably | 40-52% |
| Al₂O₃ | 16-27%, | " | 16-25% |
| CaO | 10-25% | | |
| MgO | 0-5% | | |
| Na₂O | 0-15%, | " | 6-12% |
| K₂O | 0-15%, | " | 3-12% |
| R₂O (Na₂O + K₂O) | 10-17%, | " | 12-17% |
| P₂O₅ | 0-3%, | " | 0-2% |
| Fe₂O₃ | 0-15%, | | |
| B₂O₃ | 0-8%, | " | 0-4% |
| TiO₂ | 0-3%. | | |

2. The method according to Claim 1, **characterized in that** the mineral wool comprises the constituents below according to the following percentages by weight:
| | | | |
|---|---|---|---|
| SiO₂ | 39-55%, | preferably | 40-52% |
| Al₂O₃ | 16-25%, | " | 17-22% |
| CaO | 10-25% | | |
| MgO | 0-5% | | |
| Na₂O | 0-15%, | " | 6-12% |
| K₂O | 0-15%, | " | 3-12% |
| R₂O (Na₂O + K₂O) | 13,0-17%, | | |
| P₂O₅ | 0-3%, | " | 0-2% |
| Fe₂O₃ | 0-15%, | | |
| B₂O₃ | 0-8%, | " | 0-4% |
| TiO₂ | 0-3%. | | |

3. The method according to Claims 1 or 2, **characterized in that** content of alkali (Na₂O + K₂O) is between :
13.0 ≤ R₂O ≤ 15, in particular 13.3 ≤ R₂O ≤ 14.5%.

4. The method according to any one the preceding claims, **characterized in that** the mineral wool comprises contents of Fe₂O₃ (total iron), such as:
0 ≤ Fe₂O₃ ≤ 5, preferably 0 ≤ Fe₂O₃ ≤ 3, in particular 0.5 ≤ Fe₂O₃ ≤ 2.5.

5. The method according to any one of claims 1 to 3, **characterized in that** the mineral wool comprises contents of Fe₂O₃ (total iron) such as:
5 ≤ Fe₂O₃ ≤ 15, in particular 5 ≤ Fe₂O₃ ≤ 8.

6. The method according to any one the preceding claims, **characterized in that** the mineral wool complies with the relationship:
(Na₂O + K₂O) ≥ 0.5.

7. The method according to any one the preceding claims, **characterized in that** the mineral wool complies with the relationship:
(Na₂O + K₂O) ≥ 0.6, in particular (Na₂O + K₂O) ≥ 0.7.

8. The method according to any one the preceding claims, **characterized in that** the mineral wool comprises contents of lime and magnesium oxide, such as: 15 ≤ CaO ≤ 25, preferably with 0 ≤ MgO ≤ 2, in particular 0 ≤ MgO ≤ 1.
